# EUROPÄISCHE PATENTSCHRIFT

(11) **EP 2 991 748 B1**
(45) Veröffentlichungstag und Bekanntmachung des Hinweises auf die Patenterteilung: **11.08.2021**
(21) Anmeldenummer: 14716240.8
(22) Anmeldetag: 05.04.2014
(51) Int. Cl.: B01D 46/24, B01D 46/52, B01D 29/23

(54) **FILTERELEMENT**
FILTER ELEMENT
ÉLÉMENT FILTRANT

(30) Priorität: 03.05.2013 DE 102013007605
(43) Veröffentlichungstag der Anmeldung: 09.03.2016
(73) Patentinhaber: Hydac Filter Systems GmbH, 66280 Sulzbach/Saar (DE)
(72) Erfinder: SCHUNK, Andreas, 66914 Waldmohr (DE); SCHNEIDER, Dominic, 66640 Namborn (DE)
(74) Vertreter: Bartels und Partner, Patentanwälte
(86) Internationale Anmeldenummer: PCT/EP2014/000919
(87) Internationale Veröffentlichungsnummer: WO 2014/177246

(56) Entgegenhaltungen:
- DE-A1-102004 061 078
- US-A1- 2010 243 554
- US-A1- 2013 062 276

## Beschreibung

Die Erfindung betrifft ein Filterelement für Fluide, insbesondere für Hydraulikflüssigkeiten, mit den Merkmalen im Oberbegriff von Anspruch 1.

Filterelemente dieser Art sind handelsüblich. In Verbindung mit Fluidanlagen verschiedenster Art finden solche Filterelemente verbreitet Anwendung für die Filterung von Verfahrensflüssigkeiten, Druckflüssigkeiten, wie Hydraulikölen, sowie flüssigen Kraft- und Schmierstoffen, zur Aufbereitung flüssiger Medien und dergleichen. In vielen Fällen steht bei Fluidanlagen, bei denen die Filterelemente zum Einsatz kommen, nur ein begrenzter Nutzraum für den Ein- oder Ausbau der Anlagenteile zur Verfügung, die die betreffenden filterkerzenartigen Filterelemente enthalten. Andererseits ist, um entsprechend große Fluidströme filtrieren zu können, eine ausreichende Größe der von dem Filterelement zur Verfügung gestellten Filterfläche erforderlich.

Zur Bereitstellung einer ausreichend großen Filterfläche weisen die bekannten Filterelemente, wie sie auf dem Markt frei erhältlich sind, ein typischerweise aus mehreren Lagen verschiedener Filtermaterialien zusammengesetztes, zickzackförmig gefaltetes oder plissiertes Filtermedium auf. Bei der Fertigung wird das Filtermedium durch eine Schneideinrichtung hindurchgeführt, in welcher das Filtermedium randseitig auf Maß zugeschnitten wird, bevor es zu einer Faltmaschine weiterbewegt wird, in der die Zickzack-Form oder das Plissee ausgebildet wird. Im weiteren Verlauf der Fertigung wird sodann das zugeschnittene Filtermedium in Abschnitte aufgetrennt, welche zu einem Rohrkörper geformt werden und insoweit das Filterelement ausbilden.

Die DE 10 2004 061 078 A1 offenbart ein Filterelement für Fluide, insbesondere für Hydraulikflüssigkeit, bestehend aus mindestens einem Filtermantel mit mindestens einer gefalteten Filterlage, der sich zwischen zwei Endkappen erstreckt, wobei sich unter Beibehalten der Filterfaltenhöhe der Außendurchmesser des Filtermantels in Richtung auf eine der Endkappen verändert, wobei der Filtermantel einen Hohlraum umgibt und wobei die bereichsweise Änderung der Dicke des Filtermantels durch örtliches Aufbringen zusätzlicher Filterlagen erfolgt.

Die US 2013/0062276 A1 und die US 2010/0243554 A1 beschreiben weitere Filterelemente.

Hiervon ausgehend stellt sich die Erfindung die Aufgabe, ein verbessertes Filterelement zur Verfügung zu stellen, das sich durch eine hohe Filterleistung auch nach längerer Standdauer auszeichnet.

Diese Aufgabe wird durch ein Filterelement mit den Merkmalen des Patentanspruchs 1 gelöst. Vorteilhafte Ausführungsformen und Weiterbildungen des Filterelements gehen aus den Unteransprüchen hervor.

Gemäß dem Kennzeichen den Anspruchs 1 zeichnet sich das erfindungsgemäße Filterelement dadurch aus, dass die obere Endkappe einen Durchgang zur Zufuhr von Unfiltrat aufweist, das den Filtermantel vom Hohlraum ausgehend nach außen hin in Filtrationsrichtung durchströmt, wobei die untere Endkappe demgegenüber geschlossen ist, dass die vertikale Erstreckung der zusätzlichen Lagen derart ist, dass die durch die Lagen bewirkte Dickenzunahme von oben nach unten zunimmt, weil im Bodenbereich sämtliche Zusatzlagen übereinanderliegen, während im oberen Bereich die breiteste Zusatzlage freiliegend ist und in dem an die obere Endkappe anschließenden Endabschnitt keine Zusatzlage vorhanden ist, so dass sich von der offenen oberen Endkappe her der Außendurchmesser des Filtermantels in Richtung auf die geschlossene untere Endkappe vergrößert.

Die bereichsweise Änderung der Dicke des Filtermantels bei gleichbleibender Faltenhöhe erfolgt durch örtliches Aufbringen zusätzlicher, insbesondere bandförmiger, Filterlagen. So kann beispielsweise von einem Rand der den Filtermantel bildenden Filterlagenmatte ausgehend eine sich zum anderen Rand der Filtermatte hin ändernde Anzahl von Filterlagen vorgesehen sein.

Dadurch, dass sich der Außendurchmesser des Filtermantels von der offenen Endkappe her in Richtung auf die geschlossene Endkappe vergrößert, ergibt sich bei Zufuhr des Unfiltrats von der oberen Endkappe her eine für die Durchströmung des Filtermediums günstige, sich von unten nach oben verjüngende Konusform.

Durch eine derartige Formgebung des Filtermantels, beispielsweise dergestalt, dass die äußere und/oder innere Mantelfläche des Filtermantels einen konischen Verlauf besitzt, eröffnet sich die Möglichkeit, den Filtermantel, genauer gesagt den Aufbau der den Filtermantel bildenden Filterlagen, optimal an die unterschiedlichen Druck- und Strömungsverhältnisse anzupassen, die sich im Betrieb in den unterschiedlichen Bereichen zwischen den Endkappen ergeben. So kann beispielsweise durch eine größere Faltenhöhe und dadurch bedingte Verdickung des Filtermantels dem Umstand, dass in der Nähe einer der Endkappen ein höheres oder ein niedrigeres dynamisches oder statisches Druckniveau herrscht, Rechnung getragen werden. Oder es kann im Hinblick hierauf der Außendurchmesser des Filtermantels an einer oder anderen Endkappe größer gewählt sein als im Bereich der anderen Endkappe. Dadurch ist eine gleichmäßigere Durchströmung erreichbar, mit dem Ergebnis eines niedrigen Druckverlustes bei geringerer Turbulenz, wodurch wiederum hohe Filterleistungen bei langen Standzeiten erzielt werden können.

Nachstehend ist die Erfindung anhand von in der Zeichnung dargestellten Ausführungsbeispielen im Einzelnen erläutert. Es zeigen:
- Fig. 1: in teilweise aufgeschnittener, schematisch vereinfachter Darstellung den oberen Teil eines Filterelements gemäß dem Stand der Technik;
- Fig. 2: eine perspektivische Schrägansicht eines Ausführungsbeispiels des Filterelements;
- Fig. 3: eine in Längsrichtung aufgeschnitten gezeichnete perspektivische Schrägansicht des Ausführungsbeispiels von Fig. 2;
- Fig. 4: eine stark schematisch vereinfachte Funktionsskizze zur Verdeutlichung der Konfiguration lediglich des Filtermantels eines Filterelements, wobei die Darstellung mit übertrieben groß gezeigtem Kegelwinkel nicht maßstäblich ist;
- Fig. 5 und 6: der Fig. 4 ähnliche Funktionsskizzen des Filtermantels weiterer Ausführungsbeispiele;
- Fig. 7: eine schematisch vereinfachte Schrägansicht eines aufgeweitet dargestellten Filtermantels;
- Fig. 8: eine schematisch vereinfachte Draufsicht des Filtermantels eines weiteren Ausführungsbeispiels;

- Fig. 9: eine vergrößerte Darstellung des in Fig. 8 mit IX bezeichneten Bereichs; und
- Fig. 10: eine längs aufgeschnittene, perspektivische Schrägansicht des Filterelements gemäß einem Ausführungsbeispiel der Erfindung.

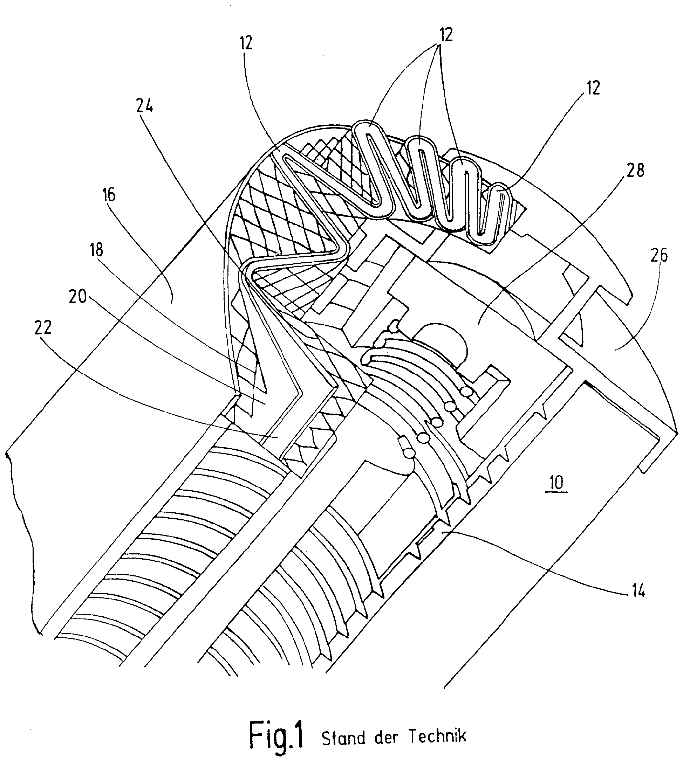

Die Ausführungsformen der Fig. 1 bis 9 dienen lediglich der Erläuterung des Hintergrundes der Erfindung und sind nicht Gegenstand eines Anspruches.

Das in der Fig. 1 teilweise dargestellte Filterelement, wie es zum Stand der Technik zählt, weist als Filtermaterial einen Filtermantel 10 mit einer vorgebbaren Flächenausdehnung und vorgebbaren Filtereigenschaften auf. Der Filtermantel 10 ist, wie in der Fig. 1 dargestellt, plissiert, mit einzelnen Filterfalten 12, die in dichter Packungsfolge sich zwischen einem inneren fluiddurchlässigen Stützrohr 14 sowie zwischen einer äußeren zylindrischen Ummantelung 16 erstrecken, die gleichfalls fluiddurchlässig ist. Bei der Ummantelung 16 kann es sich um eine Gitterstruktur aus Kunststoff oder Edelstahl oder dergleichen handeln. Der besseren Darstellung wegen sind die einzelnen Filterfalten 12 im linken oberen Bereich der Fig. 1 teilweise auseinandergezogen dargestellt, und der Einzellagenaufbau des plissierten Filtermantels 10 ergibt sich aus der dem Betrachter zugewandten Teildarstellung.

Bei derart aufgebauten Filterelementen besteht der Filtermantel 10 üblicherweise aus einer ersten Stützlage 18, einer zweiten Lage 20 als Schutzvlies, einer dritten Lage 22 als Hauptvlies oder Filterlage, gegebenenfalls einer weiteren, nicht dargestellten Lage eines sich ebenfalls anschließenden Schutzvlieses und gegebenenfalls einer vierten Lage einer erneuten, innenumfangsseitig verlaufenden Stützlage 24. Die genannten Stützlagen 18, 24 können aus einem Drahtgewebe, einem Kunststoffgitter oder einem Kunststoffgewebe bestehen. Eine dieser Stützlagen 18, 24 dient, zusätzlich zur Abstützfunktion, als Drainagelage. Die Schutzvlieslagen 20 bestehen regelmäßig aus einem Kunststoffvlies, und die Hauptvlies- oder Filterlage 22 besteht aus Materialien wie Glasfaserpapier, synthetischem Filtermaterial (Melt-Blown-Fasern), Zellulosepapier oder dergleichen. Die genannten Lagen können auch aus sog. Composite-Materialien gleicher oder verschiedener Art aufgebaut sein. In Abhängigkeit vom Lagenaufbau und der jeweils eingesetzten Filtermaterialien weist der Filtermantel 10 vorgebbare Filtereigenschaften auf, die sich an der Filtrationsaufgabe orientieren, wobei grundsätzlich eine hohe Differenzdruckstabilität gewünscht ist, ebenso wie eine hohe β-Stabilität über einen weiten Differenzdruckbereich, sowie vorgebbare Filterfeinheiten, wobei zur Verringerung des Differenzdruckes am Filterelement ausreichend Strömungskanäle zur Verfügung stehen sollen, gleichzeitig jedoch eine gute Widerstandsfähigkeit gegen wechselnde Druckbelastungen gewährleistet sein soll.

In Blickrichtung auf die Fig. 1 gesehen, wird bei dem bekannten Filterelement der Filtermantel 10 von außen nach innen durchströmt und stützt sich innenumfangsseitig mit seinen betreffenden Faltenumlenkungen am Außenumfang des Stützrohres 14 mit dessen ringförmigen Durchlässen ab. Filtermantelenden sind jeweils in einer Endkappe aufgenommen, wobei in der Fig. 1 nur die obere Endkappe 26 dargestellt ist, die im Übrigen ein federbelastetes Bypassventil 28 umfasst, das aus Sicherheitsgründen einen Fluiddurchlass ermöglicht, auch wenn der Filtermantel 10 von Verschmutzungen zugesetzt ist.

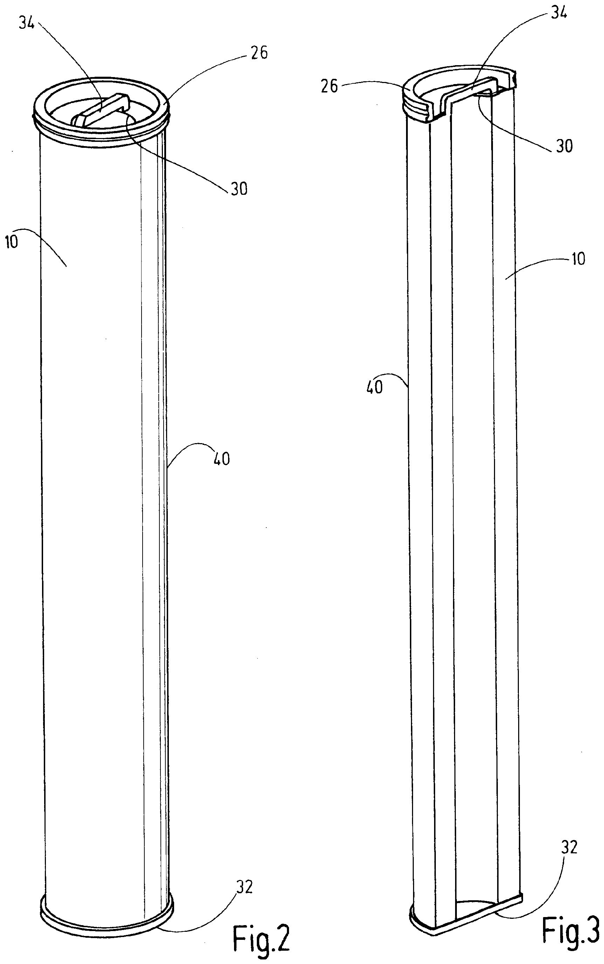

Die Fig. 2 zeigt demgegenüber ein Filterelement in Form einer Art Filterkerze, bei der beim Filtervorgang der Filtermantel 10 von seiner Innenseite nach außen hin durchströmt wird. Dementsprechend weist die in Fig. 2 oben liegende Endkappe 26 einen zentralen Durchgang 30 für die Zufuhr des Unfiltrats auf, während die untere Endkappe 32 geschlossen ist. In der Fig. 2, ebenso wie in Fig. 3, die das Ausführungsbeispiel in Längsrichtung aufgeschnitten zeigt, ist die äußere Ummantelung, die in Fig. 1 mit 16 bezeichnet ist, jeweils weggelassen. Ein an der offenen Endkappe 26 angeformter Griffbügel 34 erleichtert die Handhabung bei Ein- oder Ausbau des Filterelements, das in einem Filtergehäuse oder einem Tank (beides nicht dargestellt) aufnehmbar ist. Die Außenseite des in Fig. 2 und 3 gezeigten Filterelements ist im Verlauf von der geschlossenen unteren Endkappe 32 zur oberen, offenen Endkappe 26 hin leicht konisch verjüngt, wobei die Verjüngung bei der Darstellung von Fig. 2 und 3 kaum sichtbar ist, da der Winkel der konischen Verjüngung beim gezeigten Beispiel lediglich ein Winkelgrad beträgt.

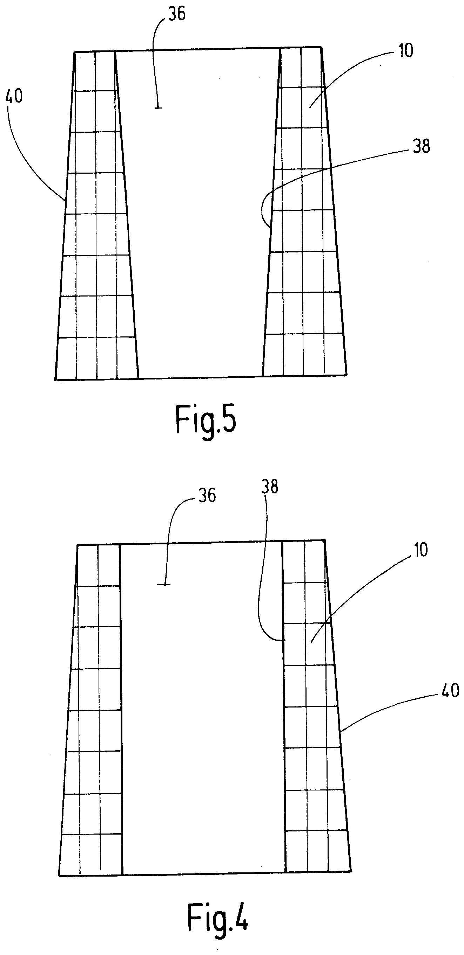

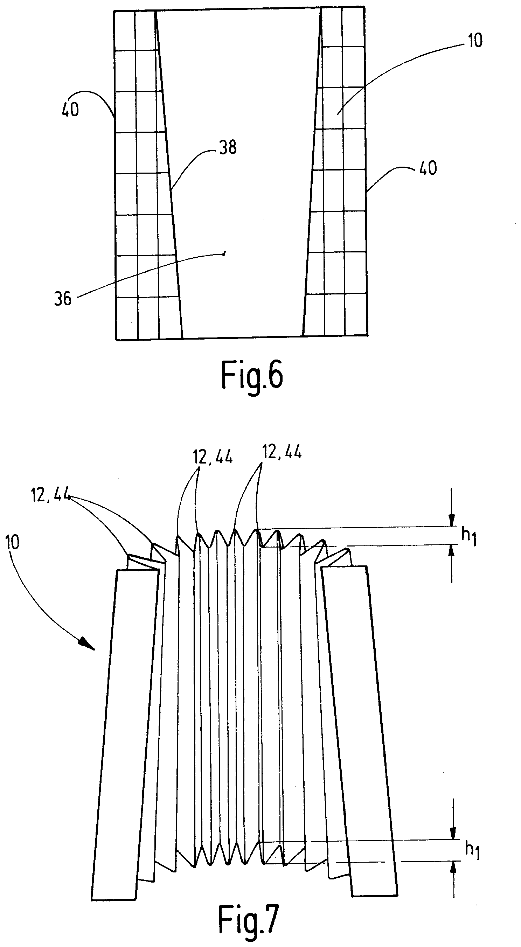

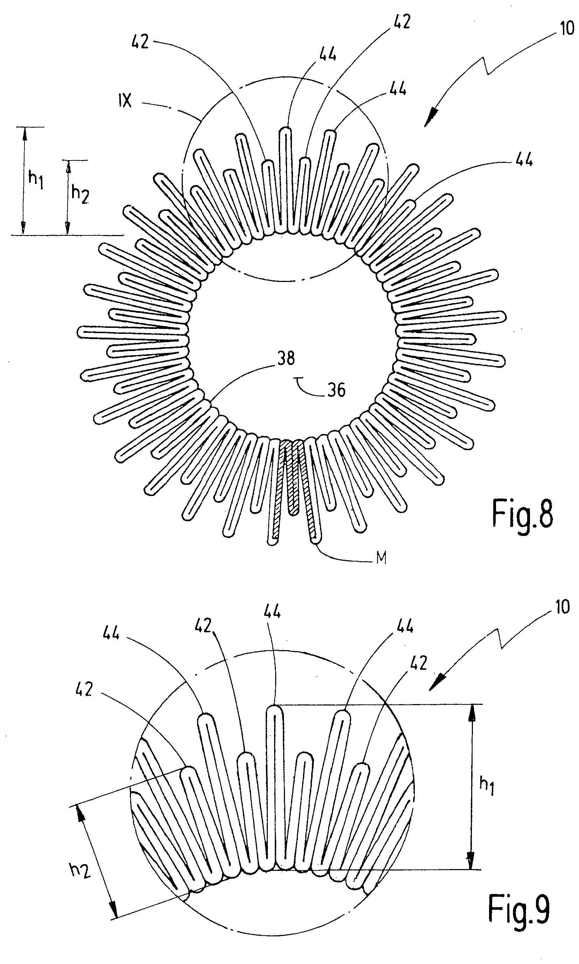

Die Fig. 4 bis 6 verdeutlichen anhand stark vereinfachter und nicht maßstäblicher Skizzen, in denen zwecks leichter Verständlichkeit Kegelwinkel übertrieben groß dargestellt sind, mehrere Möglichkeiten, den Filtermantel 10 so zu gestalten, dass sich die Dicke des Filtermantels 10 in Richtung von einer Endkappe zur anderen Endkappe hin verändert. Bei den Beispielen von Fig. 4 bis 6 ist für eine Zunahme der Dicke des Filtermantels 10 von oben nach unten, d.h. von der oberen, offenen Endkappe 26 zur unteren geschlossenen Endkappe 32 hin, jeweils eine Änderung der Höhe h₁ (siehe Fig. 9) der Filterfalten 12, 44 vorgesehen. Dabei ist bei den Beispielen von Fig. 4 bis 6 jeweils die Änderung der Filterfaltenhöhe stetig, so dass sich für den Filtermantel 10 eine Konusform ergibt. Die Fig. 4 zeigt diesbezüglich eine Konfiguration, bei der der vom Filtermantel 10 umgebene innere Hohlraum 36 mit seiner Innenseite 38 einen Hohlzylinder definiert, während die Außenseite 40 einen sich nach oben verjüngenden Konus 40 bildet und der Außendurchmesser des Filtermantels 10 von oben nach unten vergrößert ist. Das Beispiel von Fig. 5 unterscheidet sich demgegenüber dadurch, dass durch von unten nach oben abnehmende Höhe h₁ der Filterfalten 12, 44 sowohl der innere Hohlraum 36 eine Konusform besitzt, wobei die Innenseite 38 von oben nach unten divergiert, und dadurch den Innendurchmesser des Hohlraums 36 verringert, als auch gleichzeitig die Außenseite 40 einen sich nach oben verjüngenden Konus bildet, wie dies auch bei Fig. 4 der Fall ist. Bei dem Beispiel von Fig. 6 ist demgegenüber die Außenseite 40 zylindrisch, während der innere Hohlraum 36 sich von oben nach unten konisch verjüngt, da der zwischen der Innenseite 38 gemessene Innendurchmesser des Hohlraums 36 nach unten abnimmt.

Das Ausführungsbeispiel von Fig. 7 unterscheidet sich wiederum dadurch, dass bei gleichbleibender Faltenhöhe h₁ der Filtermantel 10 an dem unteren Bereich leicht auseinandergezogen ist, um einen von unten nach oben sich verringernden Außendurchmesser zu bilden.

Die Fig. 8 und 9 zeigen für den Filtermantel 10 eine spezielle, vorteilhafte Faltungsart in Form einer sog. M-Faltung, siehe den in Fig. 8 unten mit Schraffur versehenen und mit M bezeichneten Faltungsteil. Bei dieser Faltungsart sind jeweils alternierend zu Falten 44 einer ersten Art, die durch ihre Faltenhöhe h₁ die Dicke und damit den Außendurchmesser des gebildeten Filtermantels 10 bestimmen, Filterfalten 42 einer zweiten Art vorgesehen, die eine niedrigere Faltenhöhe h₂ besitzen. Um bei einem solchen Faltenaufbau, der sog. M-Faltung, eine gewünschte Konizität auszubilden, ist eine entsprechende Änderung der Faltenhöhe h₁ für die Falten 44 der ersten Art über die Höhe des Filtermantels 10 vorgesehen.

Wie bereits erwähnt, braucht die Änderung der Filterfaltenhöhen nicht stetig zu sein. Statt einer regulär konischen Form an Außenseite 40 oder Innenseite 38 des Filtermantels 10 könnte durch im Verlauf zunehmende und abnehmende Faltenhöhen eine ballige oder unregelmäßige Kontur des Filtermantels 10 gebildet sein.

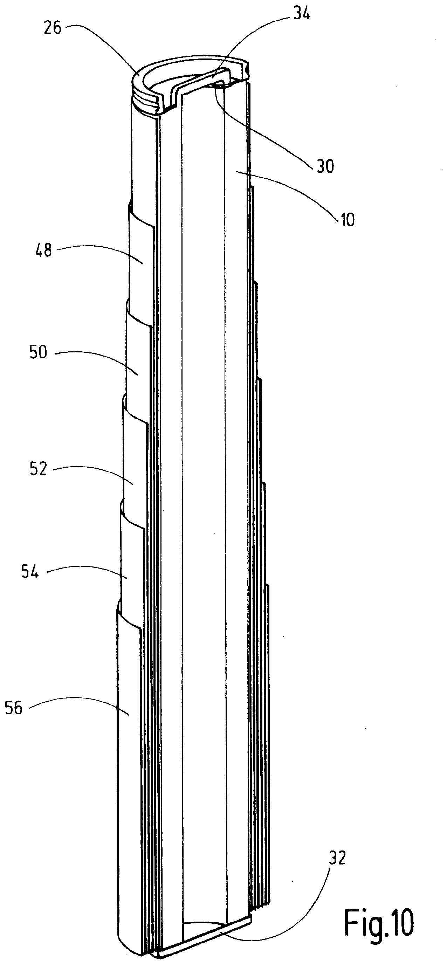

Die Fig. 10 zeigt in einer der Fig. 3 ähnlichen Darstellungsweise ein Ausführungsbeispiel der Erfindung, bei dem, bei gleichbleibender Filterfaltenhöhe des Filtermantels 10, eine gewünschte bereichsweise Änderung der Dicke des Filtermantels 10 dadurch realisiert ist, dass zusätzliche Filterlagen 48, 50, 52, 54 und 56 in Form unterschiedlich breiter Bänder am Filtermantel 10 vorgesehen sind. Wie in Fig. 10 gezeigt, ist die vertikale Erstreckung der zusätzlichen Lagen derart, dass die durch die Lagen bewirkte Dickenzunahme von oben nach unten zunimmt, weil im Bodenbereich sämtliche Zusatzlagen übereinanderliegen, während im oberen Bereich die breiteste Zusatzlage 48 freiliegend ist und in dem an die obere Endkappe 36 anschließenden Endabschnitt keine Zusatzlage vorhanden ist. Somit ergibt sich für den Außendurchmesser die gewünschte, sich nach oben verjüngende Form. Bei den Zusatzlagen 48, 50, 52, 54, 56 kann es sich um unterschiedliche Materialien handeln, beispielsweise zusätzliche Filterlagen und/oder Stützlagen und/oder Drainagelagen.

## Patentansprüche

1. Filterelement für Fluide, insbesondere für Hydraulikflüssigkeit, bestehend aus mindestens einem Filtermantel (10) mit mindestens einer gefalteten Filterlage, der sich zwischen zwei Endkappen (26, 32) erstreckt, wobei sich unter Beibehalten der Filterfaltenhöhe (h₁) der Außendurchmesser des Filtermantels (10) in Richtung auf eine der Endkappen (26, 32) verändert, wobei der Filtermantel (10) einen Hohlraum umgibt und wobei die bereichsweise Änderung der Dicke des Filtermantels (10) durch örtliches Aufbringen zusätzlicher Filterlagen (48, 50, 52, 54, 56) erfolgt, **dadurch gekennzeichnet, dass** die obere Endkappe (26) einen Durchgang (30) zur Zufuhr von Unfiltrat aufweist, das den Filtermantel (10) vom Hohlraum ausgehend nach außen hin in Filtrationsrichtung durchströmt, wobei die untere Endkappe (32) demgegenüber geschlossen ist, dass die vertikale Erstreckung der zusätzlichen Lagen (48, 50, 52, 54, 56) derart ist, dass die durch die Lagen (48, 50, 52, 54, 56) bewirkte Dickenzunahme von oben nach unten zunimmt, weil im Bodenbereich sämtliche Zusatzlagen (48, 50, 52, 54, 56) übereinanderliegen, während im oberen Bereich die breiteste Zusatzlage (48) freiliegend ist und in dem an die obere Endkappe (26) anschließenden Endabschnitt keine Zusatzlage (48, 50, 52, 54, 56) vorhanden ist, so dass sich von der offenen oberen Endkappe (26) her der Außendurchmesser des Filtermantels (10) in Richtung auf die geschlossene untere Endkappe (32) vergrößert.

## Claims

1. Filter element for fluids, in particular for hydraulic fluid, consisting of at least one filter casing (10) with at least one pleated filter layer which extends between two end caps (26, 32), wherein the external diameter of the filter casing (10) changes towards one of the end caps (26, 32) while retaining the filter pleat height (hi), wherein the filter casing (10) surrounds a cavity and wherein the change in thickness of the filter casing (10) in certain areas is effected by local application of additional filter layers (48, 50, 52, 54, 56), **characterised in that** the upper end cap (26) has a passage (30) for supplying unfiltered medium which flows outwards through the filter casing (10), starting from the cavity, in the direction of filtration, wherein the lower end cap (32), in contrast, is closed, and **in that** the vertical extension of the additional layers (48, 50, 52, 54, 56) is such that the increase in thickness brought about by the layers (48, 50, 52, 54, 56) increases from top to bottom, because in the bottom region all the additional layers (48, 50, 52, 54, 56) lie on top of each other, while in the upper region the widest additional layer (48) is exposed and, in the end section adjoining the upper end cap (26), no additional layer (48, 50, 52, 54, 56) is present, so that the external diameter of the filter casing (10) increases from the open upper end cap (26) towards the closed lower end cap (32).

## Revendications

1. Elément de filtre pour des fluides, notamment pour du liquide hydraulique, constitué d'au moins une chemise (10) de filtre ayant au moins une couche de filtre pliée, qui s'étend entre deux coiffes (26, 32) d'extrémité, dans lequel, tout en conservant la hauteur (h₁) des plis du filtre, le diamètre extérieur de la chemise (10) du filtre se modifie en direction de l'une des coiffes (26, 32) d'extrémité, dans lequel la chemise (10) de filtre entoure un espace creux et dans lequel la variation par endroits de l'épaisseur de la chemise (10) du filtre s'effectue par dépôt local de couches (48, 50, 52, 54, 56) de filtres supplémentaires, **caractérisé en ce que** la coiffe (26) d'extrémité supérieure a un passage (30) pour l'apport de non-filtrat, qui traverse dans la direction de filtration la chemise (10) du filtre à partir de l'espace vers l'extérieur, dans lequel la coiffe (32) d'extrémité inférieure est en revanche fermée, **en ce que** l'étendue verticale des couches (48, 50, 52, 54, 56) supplémentaires est telle que l'augmentation d'épaisseur, provoquée par les couches (48, 50, 52, 54, 56) supplémentaires, augmente de haut en bas, parce que dans la partie de fond, l'ensemble des couches (48, 50, 52, 54, 56) supplémentaires sont superposées, tandis que, dans la partie supérieure, la couche (48) supplémentaire la plus large est à découvert et il n'y a pas de couche (48, 50, 52, 54, 56) supplémentaire dans la partie d'extrémité se raccordant à la coiffe (26) d'extrémité supérieure de sorte que, à partir de la coiffe (26) d'extrémité supérieure ouverte, le diamètre extérieur de la chemise (10) du filtre s'agrandit en direction de la coiffe (32) d'extrémité inférieure fermée.
